# EUROPEAN PATENT APPLICATION

(11) **EP 3 312 067 A1**
(43) Date of publication of application: **25.04.2018**
(21) Application number: 17191742.0
(22) Date of filing: 19.09.2017
(51) Int. Cl.: B60W 10/02, B60W 10/06, B60W 10/11, B60W 30/18, B60W 50/14

(54) **DISPLAY SYSTEM FOR VEHICLE**

(30) Priority: 18.10.2016 JP 2016204483
(71) Applicant: TOYOTA JIDOSHA KABUSHIKI KAISHA, Toyota-Shi, Aichi-Ken 471-8571 (JP)
(72) Inventor: KOHYAMA, Takashi, Toyota-shi, Aichi-Ken 471-8571 (JP)
(74) Representative: Intès, Didier Gérard André

(57) **Abstract**

A display system for use in a vehicle including an internal combustion engine (1), a gearbox (3) operable to change gear positions, and a clutch device (2) disposed between the engine and the gearbox (3) is provided. The display system includes a rotational speed display unit (7) that displays a rotational speed of the engine to the driver, and a display controller (400) that causes the rotational speed display unit (7) to display rotational speeds of the engine corresponding to a plurality of gear positions when they are established where it is assumed that the clutch device is engaged at a current vehicle speed, during coasting with the clutch device released, and the gear positions, such that each of the rotational speeds is associated with the corresponding gear position.

## Description

### 1. Field of the Invention

The invention relates to a display system for a vehicle that include a clutch disposed in a power transmission pathway between an internal combustion engine and a gearbox. In particular, the invention is concerned with display directed to a driver, when the vehicle is coasting with the clutch released.

### 2. Description of Related Art

An automatic clutch that is automatically released and engaged by means of a clutch actuator is known, as a clutch device disposed in a power transmission pathway between an engine (internal combustion engine) and a manual transmission device, as described in Japanese Patent Application Publication No. 2011-219087 (JP 2011-219087 A).

In the vehicle installed with the automatic clutch, when a coasting start condition is satisfied during traveling, the engine is stopped, and the automatic clutch is released, so that the vehicle travels in a coasting mode, as described in JP 2011-219087 A. This traveling mode is generally called "free-running". When the vehicle travels in the free-running mode, no braking force (so-called "engine brake") is produced due to dragging of the engine; therefore, the coasting distance can be increased, and the fuel consumption rate or efficiency of the engine can be improved. During traveling in the free-running mode, the system described in JP 2011-219087 A also determines a recommended gear position to be established after the end of free-running, according to the vehicle speed, and displays the recommended gear position to the driver.

### SUMMARY OF THE INVENTION

The present inventor focused on a situation as follows: when the driver performs shifting operation during free-running, according to the recommended gear position thus displayed, a traveling state desired or requested by the driver may not be obtained, as a traveling state of the vehicle after the end of free-running, depending on the driver's preference in terms of driving or traveling conditions of the vehicle, which may result in deterioration of driveability. For example, the traveling state of the vehicle desired by the driver at the end of free-running differs, between the case where the driver places a higher value on the fuel consumption rate or efficiency, and the case where the driver places a higher value on so-called sporty traveling. Therefore, it is difficult to select a gear position for securing favorable driveability, merely by displaying a single recommended gear position.

Namely, when the driver wishes to obtain a traveling state of the vehicle according to his/her own preference or taste in driving, he/she will select a gear position according to the preference. For example, when the driver places a higher value on sporty traveling, and wishes to enhance the re-acceleration performance after the end of free-running, he/she will likely select a lower gear position than the recommended gear position. However, it is difficult for the driver to determine, at the time of shifting operation prior to the end of free-running, whether the traveling state of the vehicle after the end of free-running will be suitable for the preference, or the like.

Therefore, the inventor of this invention considered it desirable to provide a display that enables the driver to grasp, in advance, whether the traveling state of the vehicle after the end of free-running will be suitable for the preference, or the like.

The invention provides a display system for use in a vehicle, which displays a traveling state of the vehicle after the end of free-running, to the driver, during free-running (coasting), such that the display leads to improvement in the driveability.

According to one aspect of the invention, a display system is provided for use in a vehicle including an internal combustion engine, a gearbox operable to change gear positions according to shifting operation of a driver, and a clutch device that is disposed in a power transmission pathway between the internal combustion engine and the gearbox, and can be released and engaged. The display system includes a rotational speed display unit that displays a rotational speed of the internal combustion engine to the driver, and a display controller that causes the rotational speed display unit to display rotational speeds of the internal combustion engine corresponding to a plurality of gear positions when the gear positions are established in the gearbox when it is assumed that the clutch device is engaged at a current vehicle speed, during coasting of the vehicle in which the clutch device is released, and the plurality of gear positions, such that each of the rotational speeds is associated with a corresponding one of the plurality of gear positions.

According to the above aspect of the invention, when the vehicle is coasting with the clutch device released, the display controller causes the rotational speed display unit to display the rotational speeds of the internal combustion engine corresponding to the plurality of gear positions when they are established in the gearbox when it is assumed that the clutch device is engaged at the current vehicle speed, and the plurality of gear positions, such that each of the rotational speeds is associated with a corresponding one of the gear positions. Therefore, when the driver performs a shifting operation during coasting, he/she is able to grasp in advance the relationship between the gear position, and the rotational speed of the internal combustion engine when coasting is finished with the gear position established. Namely, the driver is able to grasp, in advance, the gear position for obtaining the rotational speed of the internal combustion engine suitable for the driver's preference in terms of driving, or traveling conditions of the vehicle. Consequently, the driver is able to appropriately select the gear position for obtaining the desired or requested traveling state, as the traveling state of the vehicle when coasting ends, which leads to improvement in driveability. The coasting mentioned above includes coasting when the internal combustion engine is stopped, and coasting when the internal combustion engine is driven.

In the display system as described above, the display controller may be configured to determine a recommended gear position based on the current vehicle speed, and cause the rotational speed display unit to display the recommended gear position, and the rotational speed of the internal combustion engine when it is assumed that the clutch device is engaged at the current vehicle speed and the recommended gear position is established, such that the recommended gear position is associated with the rotational speed.

With the above configuration, the driver is able to grasp the recommended gear position, by visually checking display on the rotational speed display unit. Then, by comparing the rotational speeds of the internal combustion engine which are associated with the recommended gear position, and the other gear positions displayed, the driver is able to select a gear position, so that the rotational speed of the internal combustion engine after the end of coasting will be suitable for the driving preference or traveling conditions of the vehicle.

In the display system as described above, the display controller may be configured to determine a group of recommended gear positions in which the rotational speed of the internal combustion engine is within a predetermined range, based on the current vehicle speed, and cause the rotational speed display unit to display a plurality of gear positions included in the group of recommended gear positions, and the rotational speeds of the internal combustion engine corresponding to the plurality of gear positions included in the group of recommended gear positions when the gear positions are established when it is assumed that the clutch device is engaged at the current vehicle speed, such that the plurality of gear positions are respectively associated with the rotational speeds.

With the above configuration, if the driver selects one of the group of recommended gear positions displayed on the rotational speed display unit, and shifts the gearbox to the selected gear position, the rotational speed of the internal combustion engine after the end of coasting falls within the predetermined range. Therefore, it is possible to reduce or eliminate a possibility that the rotational speed of the internal combustion engine excessively increases since the gear ratio of the gear position is too large after the end of coasting, and the braking force produce by engine brake becomes too large, thus causing the driver or passenger to feel strange or uncomfortable. It is also possible to reduce or eliminate a possibility that the gear ratio of the gear position after the end of coasting is so small that a shortage of driving force is induced, and sufficient re-acceleration performance of the vehicle cannot be obtained.

In the display system as described above, the display controller may include a slope determining unit that determines whether a road on which the vehicle is traveling is a slope road having a predetermined gradient or larger. When the slope determining unit determines that the road is the slope road having the predetermined gradient or larger, the display controller may be configured to cause the rotational speed display unit to display a gear position having a larger gear ratio than that when the road is a slope road having a smaller gradient than the predetermined gradient, as the recommended gear position.

When the road on which the vehicle is traveling is an uphill road having the predetermined gradient or larger, the deceleration during coasting is high, and it is preferable to recommend a gear position having a larger gear ratio (on the lower gear side) than that when the gradient of the road is smaller than the predetermined value, so that sufficient re-acceleration performance can be obtained after the end of coasting. Also, when the road on which the vehicle is traveling is a downhill road having the predetermined gradient or larger, the acceleration during coasting is increased, and it is preferable to recommend a gear position having a larger gear ratio (on the lower gear side) than that when the gradient of the road is smaller than the predetermined value, so that large braking force produced by engine brake can be obtained at the end of coasting. With the recommended gear position thus determined in view of the above points displayed on the rotational speed display unit, a gear position that is more appropriate for the gradient of the road can be recommended to the driver.

The display system as described above may further include a warning device that warns the driver when an actual gear position of the gearbox when the vehicle is coasting is different from the recommended gear position.

With the above arrangement, through warning by use of the warning device, the driver can be urged to perform shifting operation so that the actual gear position coincides with the recommended gear position. Therefore, it is possible to reduce or eliminate a possibility of excessively increasing the rotational speed of the internal combustion engine after the end of coasting (when the gear ratio of the actual gear position is significantly larger than that of the recommended gear position), or a possibility of inducing a shortage of driving force (when the gear ratio of the actual gear position is significantly smaller than that of the recommended gear position).

In the display system as described above, the display controller may be configured to acquire information about a road on which the vehicle is traveling, from a navigation system (e.g., a GPS such as those installed permanently or temporarily in a car), and cause the rotational speed display unit to display the recommended gear position determined according to the information acquired from the navigation system.

The information about the road, which can be acquired from the navigation system, includes slope information (information of flat roads, uphill roads, and downhill roads), information on the curvature of the road, traffic congestion information, and so forth. Therefore, a more appropriate recommended gear position can be displayed on the rotational speed display unit, based on these items of information.

In the display system as described above, the display controller may be configured to cause a display panel provided in a vehicle interior to display relationships among the rotational speed of the internal combustion engine, output of the internal combustion engine, torque of the internal combustion engine, and each of the gear positions of the gearbox, along with display of the rotational speed display unit.

With the above arrangement, the driver is able to grasp, in advance, the relationships among the rotational speed of the internal combustion engine, output of the internal combustion engine, torque of the internal combustion engine, and each gear position, which are displayed on the display panel, as well as the relationship between each gear position and the rotational speed of the engine, which is displayed on the rotational speed display unit. It is thus possible to more appropriately select a gear position for obtaining the rotational speed of the engine and the output of the internal combustion engine, torque of the internal combustion engine, which are suitable for the driver's preference in terms of driving and traveling conditions of the vehicle.

According to the invention, the rotational speeds of the internal combustion engine corresponding to the plurality of gear positions when they are established when the clutch device is engaged, during coasting, and the plurality of gear positions are displayed on the rotational speed display unit, such that the engine speeds are associated with the corresponding gear positions. Therefore, when the driver performs shifting operation during coasting, he/she is able to grasp, in advance, the relationship between the gear position to be established, and the rotational speed of the engine when coasting ends with this gear position established. This enables the driver to appropriately select the gear position for obtaining the desired traveling state, as the traveling state of the vehicle at the end of coasting, thus assuring improvement of the driveability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing the general configuration of a power train of a vehicle including a display system according to a first embodiment of the invention, and its control system;
FIG. 2 is a view showing a tachometer according to the embodiment;
FIG. 3 is a block diagram showing the configuration of the control system involving various ECUs in the first embodiment;
FIG. 4 is a flowchart illustrating the procedure of recommended gear position display control according to the first embodiment;
FIG. 5 is a view showing one example of first display state of the tachometer in the first embodiment;
FIG. 6 is a view showing one example of second display state of the tachometer during traveling on a flat road in the first embodiment;
FIG. 7 is a view showing one example of second display state of the tachometer during traveling on a slope road in the first embodiment;
FIG. 8 is a view showing one example of a state into which the second display state of the tachometer during traveling on a flat road is changed in the first embodiment;
FIG. 9 is a timing chart showing changes in a free-running execution flag, vehicle speed, recommended gear position, actual gear position, and the engine speed, with time, in the first embodiment;
FIG. 10 is a block diagram showing the configuration of a control system involving various ECUs in a second embodiment of the invention;
FIG. 11 is a flowchart illustrating a part of the procedure of recommended gear position display control in the second embodiment;
FIG. 12 is a flowchart illustrating another part of the procedure of recommended gear position display control in the second embodiment;
FIG. 13 is a block diagram showing the configuration of a control system involving various ECUs in a third embodiment of the invention;
FIG. 14 is a flowchart illustrating the procedure of recommended gear position display control in the third embodiment;
FIG. 15 is a flowchart illustrating the procedure of recommended gear position display control in a fourth embodiment of the invention; and
FIG. 16 is a view showing one example of an engine torque map displayed on an instrument panel in the fourth embodiment.

### DETAILED DESCRIPTION OF EMBODIMENTS

Some embodiments of the invention will be described based on the drawings. In the embodiments, the invention is applied to a vehicle of an FF (front-engine, front-drive) type.

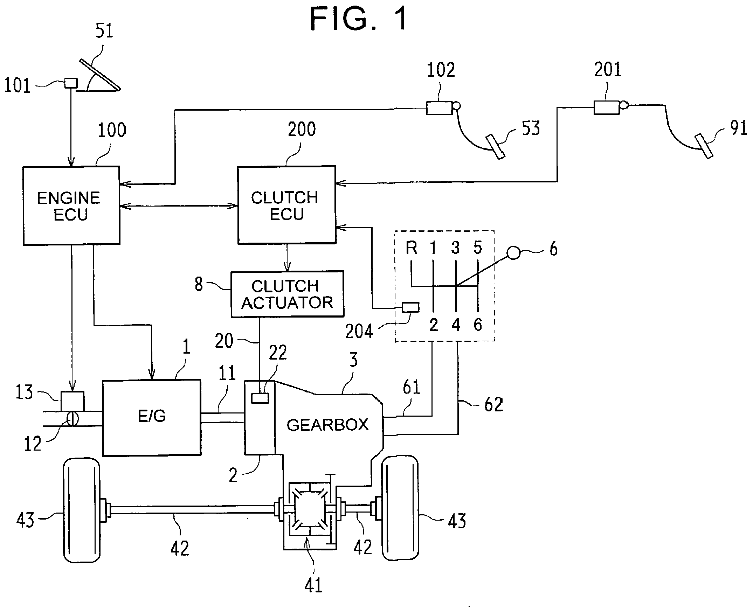

Initially, the configuration of a power train of a vehicle including a display system according to a first embodiment of the invention will be described. FIG. 1 shows the general configuration of the power train and its control system of the vehicle. As shown in FIG. 1, an automatic clutch 2 as a clutch device is placed in a power transmission pathway between a crankshaft 11 as an output shaft of an engine 1 and a gearbox (manual transmission) 3. Also, drive wheels 43, 43 are coupled to the output side of the gearbox 3, via a differential gear unit 41 and drive shafts 42, 42.

The engine 1 is an internal combustion engine, such as a gasoline engine. The engine 1 is controlled by an engine ECU 100.

The automatic clutch 2 includes a known concentric slave cylinder 22 (which will be referred to as "CSC 22"), and operates according to a hydraulic pressure supplied from a clutch pressure path 20, so that its engaging state is controlled.

More specifically, a clutch actuator 8 operates according to a clutch control signal from a clutch ECU 20, so that the hydraulic pressure supplied from the clutch pressure path 20 to a hydraulic chamber of the CSC 22 is controlled. The clutch actuator 8 includes an electric motor, speed reduction mechanism, and a clutch master cylinder, which are not shown in FIG. 1, and so forth. In operation, the hydraulic pressure generated in the clutch master cylinder is controlled, through operation of the electric motor.

If a clutch release command signal is generated as a clutch control signal from the clutch ECU 200, in a condition where the automatic clutch 2 is engaged, the CSC 22 operates (namely, a release bearing included in the CSC 22 moves forward), in response to a hydraulic pressure supplied from the clutch pressure path 20 through operation of the clutch actuator 8, so that the automatic clutch 2 is released.

On the other hand, if a clutch engagement command signal is generated as a clutch control signal from the clutch ECU 200, supply of the hydraulic pressure from the clutch pressure path 20 is cancelled or discontinued, through operation of the clutch actuator 8, and the CSC 22 operates (namely, the release bearing included in the CSC 22 moves backward), so that the automatic clutch 2 is engaged. The arrangement for switching the automatic clutch 2 between the engaged state and the released state is known in the art, and therefore, will not be described herein.

Thus, the clutch system for use with this embodiment is configured as a so-called clutch-by-wire system in which the clutch actuator 8 operates according to a clutch control signal from the clutch ECU 200, and the automatic clutch 2 is placed between the engaged state and the released state, according to the operation of the clutch actuator 8. Namely, the automatic clutch 2 is an example of "clutch device that is disposed in the power transmission pathway between the internal combustion engine and the gearbox, and can be released and engaged" according to the invention.

The clutch control signal is generated from the clutch ECU 200, when it is generated according to operation of the clutch pedal 91 by the driver, and the case where it is generated without operation of the clutch pedal 91 by the driver. Namely, in some cases, the amount of operation of the clutch pedal 91 by the driver (the amount of depression of the clutch pedal 91 from a condition (operation amount being equal to "0") where the pedal 91 is not operated) is detected by a clutch pedal stroke sensor 201 which will be described later, and the clutch control signal is generated from the clutch ECU 200, according to an output signal from the clutch pedal stroke sensor 201. In other cases, as in a free-running mode (a condition where the vehicle travels such that power transmission between the engine 1 and the gearbox 3 is interrupted) which will be described later, the clutch control signal is generated from the clutch ECU 200, even if the clutch pedal 91 is not operated by the driver.

The gearbox 3 is configured as a known manual transmission, and is in the form of a constant-mesh type parallel gear mechanism equipped with synchromesh mechanisms. For example, the gearbox 3 can be placed in a selected one of forward six-speed gear positions and a reverse gear position. When the driver operates the shift lever 6 (shifting operation), the operating force is transmitted to a given synchromesh mechanism (not shown) via a select cable 61 and a shift cable 62, to operate the mechanism, so that a desired gear position (one of the forward six-speed gear positions and reverse gear position) can be established.

The gearbox 3 may be of another type in which the force with which the shift lever 6 is operated is transmitted to a synchromesh mechanism via a fork shaft and a shift fork. Also, the gearbox 3 may be a so-called automated manual transmission (AMT). In this case, the control system includes an ECT-ECU, and actuators (a select actuator and a shift actuator) are adapted to operate to establish a desired gear position, according to a shift control signal generated from the ECT-ECU according to operation of the shift lever by the driver.

The gearbox 3 receives rotation (rotary power) of the engine 1 via the automatic clutch 2, and the speed of rotation is changed at a given speed ratio in the gearbox 3. Then, the rotary power is transmitted to the right and left drive wheels 43, 43, via the differential gear unit 41 and the drive shafts 42, 42, so as to cause the vehicle to travel.

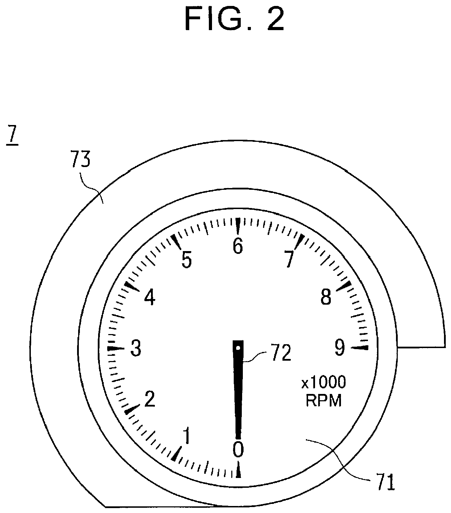

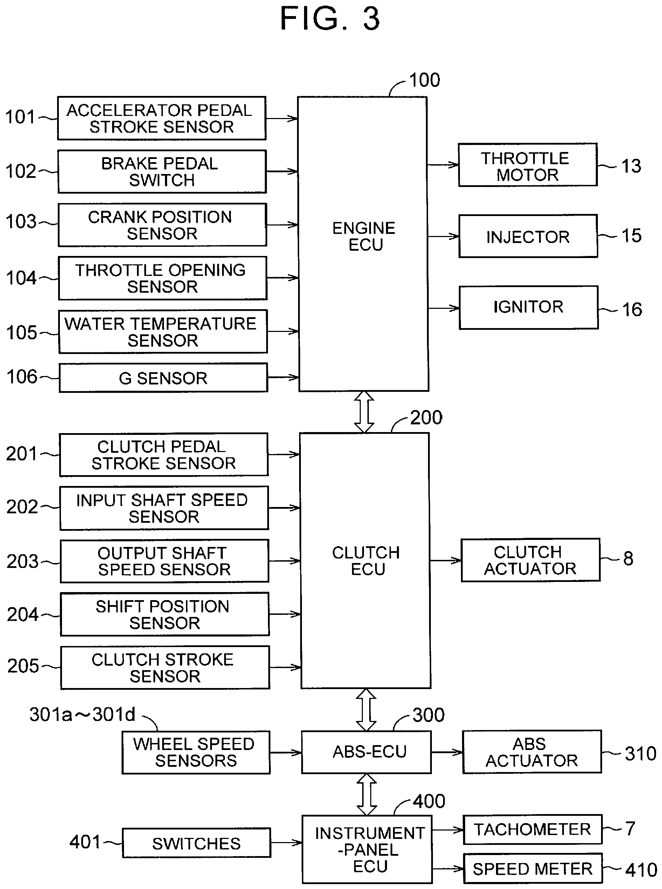

(Tachometer) An instrument panel (not shown) installed in front of the driver's seat of the vehicle according to the embodiment is provided with a tachometer (the rotational speed display unit of the invention) 7 for displaying the engine speed. FIG. 2 shows the tachometer 7. As shown in FIG. 2, the tachometer 7 is configured as an indicating instrument on which an indicator needle 72 pivots on a graduated panel 71 on which scale markings (numbers) for indicating the rotational speed of the engine 1 are displayed. With the indicator needle 72 indicating one of the scale markings on the graduated panel 71, the current engine speed is indicated on the tachometer 7 such that it can be visually recognized by the driver. Also, the indicator needle 72 is coupled to a power source (movement) (not shown), and the power source is connected to an instrumental-panel ECU 400 (see FIG. 3). Then, the power source operates to control the rotational position of the indicator needle 72, according to a command signal from the instrument-panel ECU 400, so that one of the scale markings on the graduated panel 71 is pointed by the indicator needle 72.

The graduated panel 71 is in the form of a liquid-crystal panel, and is configured such that the color and gradation of the background of the scale markings can be changed according to a control signal from the instrument-panel ECU 400. More specifically, the graduated panel 71 is a liquid-crystal panel that consists of a plurality of pixels formed in a matrix state. For example, the graduated panel 71 is an active-matrix liquid-crystal panel of a type driven by thin film transistors (TFT), for example. Each of the pixels incorporates a red pixel, a green pixel, and a blue pixel, and the voltage applied to each pixel is controlled by applying a voltage to a gate of the TFT, so that the light transmittance of each of the red pixel, green pixel and blue pixel is controlled. Light-emitting diodes that emit white light are located behind the liquid-crystal panel, and the liquid-crystal panel is illuminated with the white light emitted by the light-emitting diodes and transmitted through the panel. Then, the light transmittance of each of the red pixel, green pixel and blue pixel is controlled, and each pixel is illuminated by the light-emitting diode, so that a full-color display is provided on the liquid-crystal panel. With this arrangement, the color and gradation of the background of the scale markings can be changed.

The tachometer 7 of this embodiment is provided with a gear position display panel 73 disposed around the graduated panel 71. The gear position display panel 73 is used for indicating the relationship between the scale markings for indicating the rotational speed on the graduated panel 71, and the gear position of the gearbox 3. Like the graduated panel 71, the gear position display panel 73 is also provided by a liquid-crystal panel. The manner of displaying the gear position by use of the gear position display panel 73 will be described later. FIG. 2 shows a condition where the rotational speed of the engine 1 is equal to "0", and no gear position is displayed on the gear position display panel 73 (e.g., a condition at the time when the vehicle is stopped; a condition before start of the engine or a condition during idle-stop).

Referring next to FIG. 3, the configuration of a control system that involves various ECUs (engine ECU, clutch ECU, ABS-ECU, instrument-panel ECU) 100 - 400 will be described.

Each of the ECUs 100 - 400 includes a microcomputer consisting of CPU, ROM, RAM, back-up RAM, etc., and input and output interfaces.

To the input interface of the engine ECU 100 are connected an accelerator pedal stroke sensor 101 that outputs a signal indicative of the operation amount of the accelerator pedal 51 (see FIG. 1), a brake pedal switch 102 that outputs a brake ON signal when the brake pedal 53 is depressed, a crank position sensor 103 that outputs a signal indicative of the rotational angular position of the crankshaft 11, a throttle opening sensor 104 that outputs a signal indicative of the opening of a throttle valve 12 provided in the intake system of the engine 1, a water temperature sensor 105 that outputs a signal indicative of the coolant temperature of the engine 1, a G sensor 106 that outputs a signal indicative of the acceleration in the front-back or longitudinal direction of the vehicle (longitudinal G), and so forth.

To the output interface of the engine ECU 100 are connected a throttle motor 13, injectors 15, ignitors 16 of ignition plugs, and so forth.

The engine ECU 100 detects operating conditions of the engine 1 based on various kinds of information received from the respective sensors, and comprehensively controls operation of the engine 1, by performing control (intake air amount control) of the throttle motor 13, control (fuel injection control) of the injectors 15, control (ignition timing control) of the ignitors 16, and so forth.

To the input interface of the clutch ECU 200 are connected the clutch pedal stroke sensor 201 that outputs a signal indicative of the operation amount of the clutch pedal 91, an input shaft speed sensor 202 that outputs a signal indicative of the rotational speed of an input shaft of the gearbox 3, an output shaft speed sensor 203 that outputs a signal indicative of the rotational speed of an output shaft of the gearbox 3, a shift position sensor 204 that outputs a signal indicative of the position to which the shift lever 6 is operated, a clutch stroke sensor 205 that detects the clutch stroke in the automatic clutch 2 (or detects the position to which the release bearing 26 of the CSC 22 is moved by sliding, for example), and so forth.

The clutch actuator 8, etc. are connected to the output interface of the clutch ECU 200.

Also, an anti-lock brake system (ABS) is installed on the vehicle according to this embodiment. Namely, the front wheels 43, 43 and rear wheels are provided with brake devices controlled by ABS actuators 310, and the ABS actuators 310 are controlled according to an ABS control signal from the ABS-ECU 300. If the wheels are locked at the time of sudden braking of the vehicle, for example, the ABS actuators 310 are controlled so as to adjust the braking forces of the brake devices.

To the input interface of the ABS-ECU 300 are connected wheel speed sensors 301a - 301d that output signals indicative of the respective rotational speeds of four wheels, i.e., the front wheels 43, 43 and the rear wheels. Also, the ABS actuators 310 provided in the respective wheels are connected to the output interface of the ABS-ECU 300.

To the input interface of the instrument-panel ECU 400 are connected various switches that are provided in the vehicle interior, and are operated when switching or changing displays on the instrument panel. Also, meters and gauges (e.g., a speed meter 410 that indicates the vehicle speed) on the instrument panel, as well as the tachometer 7, are connected to the output interface of the instrument-panel ECU 400. The instrument-panel ECU 400 is one example of the display controller of the invention.

The above-indicated ECU 100 - 400 are connected by bidirectional buses, so as to communicate with each other, namely, send and receive necessary information to and from each other in both directions.

Next, the above-mentioned free-running mode as one of the traveling modes of the vehicle will be described.

The free-running mode is a traveling mode in which the vehicle is coasting with the automatic clutch 2 released during traveling. In the free-running mode, no braking force (so-called engine brake) is produced due to dragging of the engine 1; therefore, the coasting distance can be increased, and the fuel consumption rate or fuel efficiency of the engine 1 can be improved. In some cases, the vehicle travels in the free-running mode in a condition where the engine 1 is stopped (fuel injection from the injectors 15 is stopped, and the igniting operation of the ignition plugs is stopped, so that the rotational speed of the engine 1 is made equal to "0"). In other cases, the vehicle travels in the free-running mode in a condition where the engine 1 is driven (at around the idling speed) (which may also be called "idling coasting"). In this embodiment, the vehicle travels in the free-running mode with the engine 1 stopped.

A free-running start condition is satisfied when a condition where none of the accelerator pedal 51, brake pedal 53, and the clutch pedal 91 is depressed (the operation amount of each pedal is equal to "0" or substantially equal to "0") continues for a predetermined time (e.g., about 3 sec.) during traveling of the vehicle, AND the vehicle speed is equal to or higher than a predetermined value. Also, a free-running end condition is satisfied when at least one of the accelerator pedal 51 and the brake pedal 53 is depressed during free-running, or when the vehicle speed is reduced to be lower than a predetermined value.

Control (free-running control) of start and end of free-running is performed by the engine ECU 100 and the clutch ECU 200.

In conventional vehicles capable of free-running, if the gear ratio of the gear position of the gearbox established when the free-running end condition is satisfied so that free-running ends, and the automatic clutch is placed in an engaged state, is too large, the engine speed may be excessively increased (over-revolution). In this case, braking force produced by engine brake becomes excessively large, and the driver or passenger may feel strange or uncomfortable. Conversely, if the gear ratio of the gear position of the gearbox established when free-running operation ends, and the automatic clutch is placed in the engaged state, is too small, a shortage of driving force may be induced, and the re-acceleration performance of the vehicle may not be sufficiently achieved. In this case, abnormal sound or engine stall may also be induced.

Therefore, it may be considered to display, during free-running, a recommended gear position that does not induce over-revolution nor insufficient driving force, as a gear position to be established after the end of free-running, to the driver. In the system of JP 2011-219087 A identified above, the recommended gear position to be established after the end of free-running is determined according to the vehicle speed, during free-running, and the recommended gear position thus determined is displayed to the driver.

However, when the driver performs shifting operation during free-running, according to the display of the recommended gear position, the traveling state of the vehicle after the end of free-running may not be a traveling state requested or desired by the driver, depending on the driver's preference in terms of driving or traveling conditions of the vehicle, which may result in deterioration of the driveability. For example, the traveling state of the vehicle requested by the driver after the end of free-running differs between the case where the driver places a higher value on the fuel consumption rate or efficiency, and the case where the driver places a higher value on sporty traveling. Therefore, it is difficult to select a gear position that ensures favorable driveability, merely by displaying a single recommended gear position. In this connection, when the driver wishes to bring the vehicle into a traveling state that meets his/her own preference in terms of driving, etc., the driver selects a gear position according to the preference. For example, if the driver places a higher value on sporty traveling, and wishes to enhance reacceleration performance after the end of free-running, he/she will select a gear position on the lower gear side of the recommended gear position. In this case, however, it is difficult for the driver to determine, at the time of shifting operation prior to the end of free-running, whether the traveling state of the vehicle after the end of free-running will be suitable for the preference, etc.

In view of the above point, the display system of this embodiment is arranged to display a traveling state of the vehicle after the end of free-running, to the driver, during free-running, such that the display leads to improvement of the driveability.

More specifically, the engine speeds corresponding to a plurality of gear positions when they are established in the gearbox 3 where it is assumed that the automatic clutch 2 is engaged at the current vehicle speed, during the free-running, are associated with the respective gear positions, and these engine speeds and corresponding gear positions are displayed on the tachometer 7. Thus, when the driver performs shifting operation during free-running, he/she is able to grasp in advance the relationship between the gear position selected, and the engine speed when free-running ends with the gear position established. Namely, it is possible to grasp in advance the gear position for achieving the engine speed suitable for the driver's preference in terms of driving, and traveling conditions (such as a gradient of a road on which the vehicle is traveling) of the vehicle. As a result, the driver is able to appropriately select the gear position for obtaining the requested or desired traveling state, as the traveling state of the vehicle after the end of free-running, and the driveability can be improved.

The display control of the tachometer 7 during free-running is performed by the instrument-panel ECU 40. Therefore, a functional portion of the instrument-panel ECU 400 which performs the display control of the tachometer 7 is configured as the display controller of the invention. The display controller displays, on the rotational speed display unit, the rotational speeds of the internal combustion engine corresponding to a plurality of gear positions when they are established in the gearbox when it is assumed that the clutch device is engaged at the current vehicle speed, during coasting of the vehicle in which the clutch device is released, and the plurality of gear positions, such that each of the rotational speeds is associated with a corresponding one of the gear positions.

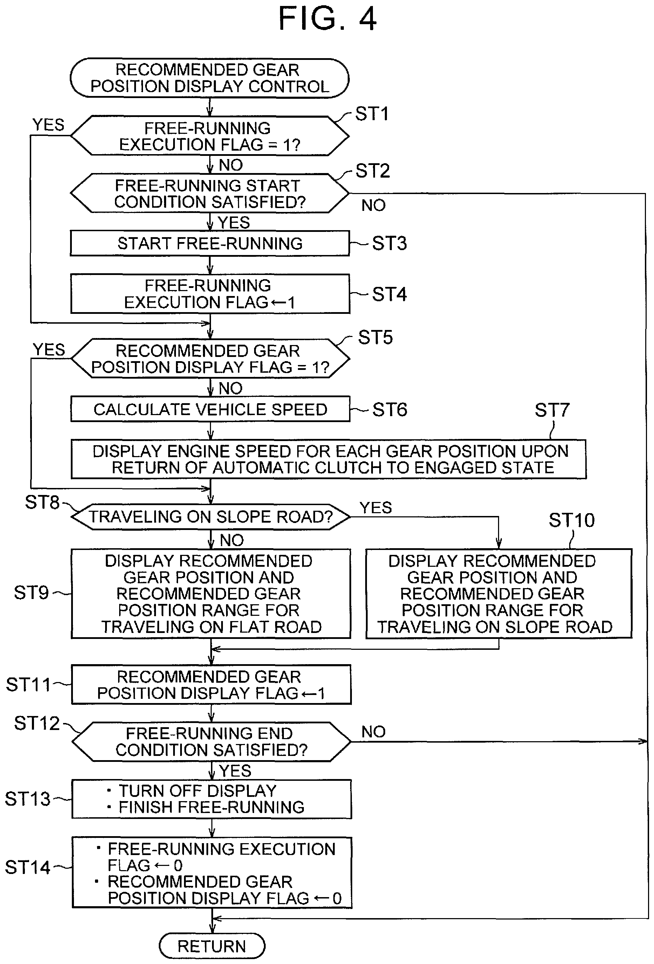

Next, the procedure of the display control (display control of the recommended gear position, etc.) as described above will be described with reference to the flowchart of FIG. 4. This flowchart is repeatedly executed at intervals of a given time, during traveling of the vehicle. It is determined whether the vehicle is traveling, based on output signals from the wheel speed sensors 301a - 301d, and an output signal from the output shaft speed sensor 203. When the vehicle starts traveling immediately after the engine starts, a free-running execution flag and a recommended gear position display flag, which will be described later, are reset to "0".

Initially, in step ST1, it is determined whether the free-running execution flag stored in advance in the clutch ECU 200 is set to "1". The free-running execution flag is set to "1" when the free-running is started, and is reset to "0" when the free-running is finished (or canceled).

Since the free-running execution flag is reset to "0" when the vehicle starts traveling, a negative decision (NO) is obtained in step S1, and the control proceeds to step ST2. In step ST2, it is determined whether the free-running start condition is satisfied. As described above, the free-running start condition is satisfied when a condition where none of the accelerator pedal 51, brake pedal 53 and clutch pedal 91 is depressed (the operation amount of each pedal is equal to "0" or substantially equal to "0") continues for a predetermined time (e.g., about 3 sec.), during traveling of the vehicle, and the vehicle speed is equal to or higher than a predetermined value. The operation amount of the accelerator pedal 51 is obtained based on an output signal from the accelerator pedal stroke sensor 101. It is determined whether the brake pedal 53 is depressed, based on an output signal from the brake pedal switch 102. The operation amount of the clutch pedal 91 is obtained based on an output signal from the clutch pedal stroke sensor 201. Also, the vehicle speed is calculated based on output signals from the wheel speed sensors 301a - 301d.

When the vehicle starts traveling, operation of the accelerator pedal 51 for the purpose of accelerating the vehicle, or operation of the clutch pedal 91 for shifting gears in the gearbox 3 is generally performed. Therefore, a negative decision (NO) is performed in step ST2, and the control returns. Thus, step ST1 (a negative decision (NO) is obtained in step ST1) and step ST2 (a negative decision (NO) is obtained in step ST2) are repeated, until the free-running start condition is satisfied.

If the free-running start condition is satisfied, and an affirmative decision (YES) is obtained in step ST2, the control proceeds to step ST3, and free-running is started. Namely, a clutch release command signal is generated from the clutch ECU 200, so that the automatic clutch 2 is released. Also, the fuel injection from the injectors 15 is stopped, and the igniting operation of the ignition plugs is stopped, so that the engine 1 is stopped. Then, the control proceeds to step ST4, in which the free-running execution flag is set to "1".

After the free-running is started in this manner, the control proceeds to step ST5, and it is determined whether the recommended gear position display flag stored in advance in the instrument-panel ECU 400 is set to "1". The recommended gear position display flag is set to "1" when a recommended gear position that will be described later is displayed on the tachometer 7, and is reset to "0" when this display is turned off.

Since the recommended gear position display flag is reset to "0" when the vehicle starts traveling, a negative decision (NO) is obtained in step ST5, and the control proceeds to step ST6. In step ST6, the current vehicle speed is calculated. More specifically, the rotational speeds of the respective wheels are calculated based on the output signals from the wheel speed sensors 301a - 301d, and the current vehicle speed is calculated based on the average value of these rotational speeds. The vehicle speed may also be calculated, based on the output signal from the output shaft speed sensor 203.

Then, the control proceeds to step ST7, in which the engine speed for each gear position when it is assumed that the automatic clutch 2 returns to the engaged state at this point in time is calculated, and the result of the calculation is displayed on the tachometer 7. Namely, a display signal is transmitted from the instrument-panel ECU 400 to the tachometer 7, so that display is performed on the tachometer 7. More specifically, the engine speed for each gear position is calculated according to a predetermined arithmetic expression, using the vehicle speed calculated in the above step ST6, the diameter of tires, the speed reduction ratio (differential ratio) of the differential gear unit 41, and the gear ratio of each gear position, as parameters. The diameter of tires, differential ratio, and the gear ratio of each gear position are determined in advance according to the specifications of the vehicle; therefore, these items of information are stored in the ROM of the clutch ECU 200 or the instrument-panel ECU 400, and the engine speed is calculated by retrieving these items of information.

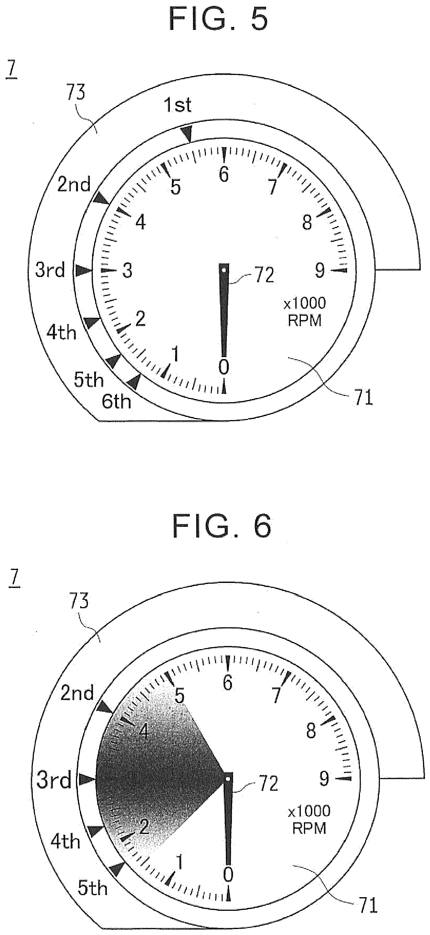

As one form of display on the tachometer 7 in step ST7, the gear positions are displayed radially outward of the scale markings on the graduated panel 71 corresponding to the engine speeds calculated for the respective gear positions. FIG. 5 shows one example of this display state. This display state will be called "first display state on the tachometer 7". The first display state shown in FIG. 5 indicates that the engine speed is 5500 rpm when the vehicle speed is 60km/h, for example, and the gear position at the time when free-running ends at this vehicle speed is the first-speed gear position (1st), that the engine speed is 4000 rpm when the gear position at the end of free-running is the second-speed gear position (2nd), that the engine speed is 3000 rpm when the gear position at the end of free-running is the third-speed gear position (3rd), that the engine speed is 2300 rpm when the gear position at the end of free-running is the fourth-speed gear position (4th), that the engine speed is 1700 rpm when the gear position at the end of free-running is the fifth-speed gear position (5th), and that the engine speed is 1300 rpm when the gear position at the end of free-running is the sixth-speed gear position (6th). Namely, on the gear position display panel 73, the letters "1st" are displayed on the radially outer side of a portion of the graduated panel 71 at which the scale marking is "5.5×1000", and the letters "2nd" are displayed on the radially outer side of a portion of the graduated panel 71 at which the scale marking is "4×1000", while the letters "3rd" are displayed on the radially outer side of a portion of the graduated panel 71 at which the scale marking is "3×1000", and the letters "4th" are displayed on the radially outer side of a portion of the graduated panel 71 at which the scale marking is "2.3×1000". Also, the letter "5th" are displayed on the radially outer side of a portion of the graduated panel 71 at which the scale marking is "1.7×1000", and the letters "6th" are displayed on the radially outer side of a portion of the graduated panel 71 at which the scale marking is "1.3x1000".

In this connection, the first-speed gear position (1st) and the sixth-speed gear position (6th) may not be displayed, on the gear position display panel 73. This is because, the engine speed in the 1st-speed gear position (1st) indicates an over-revolution state, and thus the 1st-speed gear potion (1st) is regarded as a gear position that should not be selected. Also, the engine speed in the 6th-speed gear position may induce an engine stall, and the 6th-speed gear position (6th) is also regarded as a gear position that should not be selected. Thus, these gear positions are not displayed.

After the engine speeds and the respective gear positions are displayed on the tachometer 7 such that they are associated with each other, the control proceeds to step ST8, in which it is determined whether the road on which the vehicle is currently traveling is a slope road (an uphill road or downhill road having a predetermined gradient or larger). This determination is made based on an output signal from the G sensor 106, and the output signals from the wheel speed sensors 301a - 301d. Namely, when the vehicle longitudinal acceleration (longitudinal G) calculated based on the output signal from the G sensor 106 is equal to or larger than a predetermined value (the absolute value of the longitudinal G is equal to or larger than a predetermined value), even though the amount of change of the vehicle speed calculated based on the output signals of the wheel speed sensors 301a - 301d is equal to or smaller than a predetermined value, it is determined that the vehicle is traveling on a slope road, and an affirmative decision (YES) is obtained in step ST8. The amount of change of the vehicle speed and the vehicle longitudinal acceleration, which provide threshold values based on which it is determined whether the road is a slope road, are determined in advance by experiment or simulation, and are stored in the ROM of the instrument-panel ECU 400.

The determining operation in step ST8 corresponds to operation of the slope determining unit of the invention (i.e., the slope determining unit that determines whether the road on which the vehicle is traveling is a slope road having a predetermined gradient or larger).

If the road on which the vehicle is currently traveling is not a slope road (the road is a flat road or a slope road whose gradient is smaller than the predetermined gradient), and a negative decision (NO) is obtained in step ST8, the control proceeds to step ST9, in which a recommended gear position for traveling on a flat road, and a recommended gear position range, are displayed on the tachometer 7.

The recommended gear position is determined as a preferable gear position that is preferably established at the end of free-running. Also, the recommended gear position range is determined as a scope covering two or more gear positions that can be selected within a range of the engine speed in which no over-revolution of the engine 1 nor engine stall is induced at the end of free-running.

The display of the recommended gear position and recommended gear position range is performed by changing the color and gradation of the background of the scale markings on the graduated panel 71. Namely, for display of the recommended gear position range, the background of the scale markings on the graduated panel 71 is divided into two regions having different colors, i.e., the recommended gear position range and a non-recommended gear position range that is not the recommended gear position range. For example, the non-recommended gear position range is displayed in white, and the recommended gear position range is displayed in blue. The colors of these ranges are not limited to these colors, but may be set as desired.

The recommended gear position is determined according to the vehicle speed, and is determined as a gear position, as one of the two or more gear positions present in the recommended gear position range, in which shock that occurs to the vehicle body is small, and stable behavior of the vehicle can be obtained, when the automatic clutch 2 is engaged at this point in time. The relationship between the vehicle speed and the recommended gear position is determined in advance by experiment or simulation, and stored in the ROM of the instrument-panel ECU 400, and the recommended gear position is determined by retrieving this information. Then, as the gradation of the background on the graduated panel 71, the background of the scale marking that indicates the engine speed corresponding to the recommended gear position in the recommended gear position range is provided with the darkest color, and the background color becomes gradually lighter as the distance from this scale marking becomes larger.

FIG. 6 shows one example of display state in this case. This display state will be called "second display state" of the tachometer 7. Like the display state shown in FIG. 5 as described above, the second display state shown in FIG. 6 indicates that the engine speed when the vehicle speed is 60km/h, for example, and the gear position at the time when free-running ends at this vehicle speed is the second-speed gear position (2nd) is 4000 rpm, that the engine speed when the gear position at the end of free-running is the third-speed gear position (3rd) is 3000 rpm, that the engine speed when the gear position at the time of free-running is the fourth-speed gear position (4th) is 2300 rpm, and that the engine speed when the gear position at the time of free-running is the fifth-speed gear position (5th) is 1700 rpm. In this example, the range of 1500 rpm to 5000 rpm is set as the recommended gear position range. The third-speed gear position (3rd) is set as the recommended gear position. Namely, in the recommended gear position range provided with gradation, the background at around a line pointing 3000 rpm associated with the third-speed gear position (3rd) is displayed in the darkest color, and the background color becomes gradually lighter as the distance from the line pointing 3000 rpm becomes larger. Also, the letters "3rd" representing the third-speed gear position as the recommended gear position is displayed in larger size than those representing the other gear positions.

In this example, the first-speed gear position (1st) and the sixth-speed gear position (6th) are not displayed. These gear positions are not displayed, because the engine speed in the first-speed gear position (1st) indicates an over-revolution state, and thus the first-speed gear position (1st) is regarded as a gear position that should not be selected, while the engine speed in the sixth-speed gear position (6th) indicates a possibility of causing an engine stall, and thus the six-speed gear position (6th) is also regarded as a gear position that should not be selected. Namely, the gear positions displayed on the gear position display panel 73 are only the second-speed gear position (2nd), third-speed gear position (3rd), fourth-speed gear position (4th), and the fifth-speed gear position (5th), in which the engine speed falls in the above-indicated range of 1500 rpm to 5000 rpm. These gear positions are examples of the group of recommended gear positions according to the invention (i.e., the group of recommended gear positions in which the rotational speed of the internal combustion engine is in the predetermined range).

On the other hand, if the road on which the vehicle is traveling is a slope road, and an affirmative decision (YES) is obtained in step ST8, the control proceeds to step ST10, in which the recommended gear position and recommended gear position range for slope traveling are displayed on the tachometer 7. The display of these gear position and gear position range is also performed by changing the background color of the scale markings on the graduated panel 71 and gradation of the background.

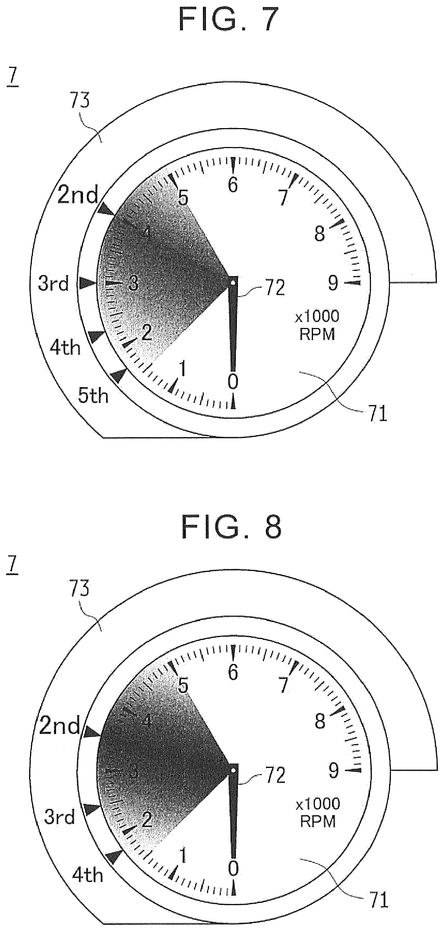

FIG. 7 shows one example of display state (second display state) in this case. The second display state shown in FIG. 7 shows display on the tachometer 7 when the vehicle speed is equal to 60 km/h, for example, as in the display states shown in FIG. 5 and FIG. 6. In FIG. 7, the second-speed gear position (2nd), rather than the third-speed gear position (3rd), is set as the recommended gear position. Namely, in the recommended gear position range provided with gradation, the background at around a line pointing 4000 rpm associated with the second-speed gear position (2nd) is displayed in the darkest color, and the background color becomes gradually lighter as the distance from the line pointing 4000 rpm becomes larger. Also, the letters "2nd" representing the second-speed gear position as the recommended gear position are displayed in larger size than that of the letters representing the other gear positions. This is because, when the road on which the vehicle is traveling is an uphill road having a predetermined gradient or larger, the deceleration during free-running is high, and it is preferable to recommend a gear position (on the lower gear side) having a larger gear ratio than that when the road is a slope road whose gradient is smaller than the predetermined gradient, or a flat road, so that sufficient re-acceleration performance can be obtained after the end of free-running. When the road on which the vehicle is traveling is a downhill road having a predetermined gradient or larger, the acceleration during free-running is increased, and it is preferable to recommend a gear position (on the lower gear side) having a larger gear ratio than that when the road is a slope road whose gradient is smaller than the predetermined gradient, or a flat road, so that sufficiently large braking force due to engine brake can be obtained after the end of free-running.

After the recommended gear position and the recommended gear position range are displayed on the tachometer 7 in the above manner, the control proceeds to step ST11, in which the recommended gear position display flag is set to "1".

Then, in step ST12, it is determined whether the free-running end condition is satisfied. As described above, when the accelerator pedal 51 or the brake pedal 53 is depressed, or when the vehicle speed is reduced to be lower than a predetermined value, it is determined that the free-running end condition is satisfied, and an affirmative decision (YES) is obtained in step ST12.

If the free-running end condition has not been satisfied, and a negative decision (NO) is obtained in step ST12, the control returns.

In the next cycle of the routine, since the free-running execution flag is set to "1" in the last cycle of the routine, and the recommended gear position display flag is set to "1", an affirmative decision (YES) is obtained in step ST1, and an affirmative decision (YES) is also obtained in step ST5. Then, the control proceeds to step ST8 and subsequent steps. Namely, it is determined whether the road on which the vehicle is traveling is a slope road, as described above, and, if it is a flat road or a slope road whose gradient is smaller than the predetermined gradient, the recommended gear position and recommended gear position range set for flat-road traveling are displayed on the tachometer 7 (step ST9). If the road is a slope road having the predetermined gradient or larger, the recommended gear position and recommended gear position range set for slope traveling are displayed on the tachometer 7 (step ST10).

In connection with the display of the above information, when the vehicle speed changes as the vehicle keeps traveling in the free-running mode, the recommended gear position needs to be changed with change of the vehicle speed. For example, when the vehicle speed is reduced as the vehicle keeps traveling in the free-running mode, the recommended gear position needs to be set to a gear position that is on the lower-gear side by one speed than the recommended gear position set in the last cycle of the routine.

FIG. 8 shows one example of display state (second display state) in this case. The second display state shown in FIG. 8 shows the case where the vehicle speed is reduced down to 40 km/h, for example, as the vehicle keeps traveling in the free-running mode. In this case, the engine speed is 3500 rpm when the gear position at the time when free-running ends at this vehicle speed is the second-speed gear position (2nd), and the engine speed is 2500 rpm when the gear position at the end of free-running is the third-speed gear position (3rd), while the engine speed is 1800 rpm when the gear position at the end of free-running is the fourth-speed gear position (4th). In this example, the recommended gear position range is set to the range of 1500 rpm to 5000 rpm. Also, the second-speed gear position (2nd) is set as the recommended gear position. Namely, in the recommended gear position region provided with gradation, the background at around a line pointing 3500 rpm associated with the second-speed gear position (2nd) is displayed in the darkest color, and the background color becomes gradually lighter as the distance from the line indicating 3500 rpm becomes larger. Also, the letters "2nd" representing the second-speed gear position as the recommended gear position are displayed in the larger size than those representing the other gear positions.

When the vehicle speed is reduced as in the above case, indication of the fifth-speed gear position (5th), as well as those of the first-speed gear position (1st) and the six-speed gear position (6th), is not displayed on the gear position display panel 73. The indication of the fifth-speed gear position (5th) is not displayed, because the engine speed in the fifth-speed gear position (5th), as well as the sixth-speed gear position (6th), involves a possibility of causing an engine stall, and the fifth-speed gear position (5th) is also regarded as a gear position that should not be selected.

In the above manner, steps ST1, ST5, ST8, ST9 (or ST10), ST11, and ST12 are repeatedly executed, during free-running.

If the free-running end condition is satisfied, an affirmative decision (YES) is obtained in step ST12, and the control proceeds to step ST13, in which display of the recommended gear position and recommended gear position range (display on the tachometer 7) as described above is turned off, and the free-running is finished. Namely, transmission of the display signal from the instrument-panel ECU 400 is cancelled, and display of the recommended gear position and recommended gear position range is turned off. Also, a clutch engagement command signal is generated from the clutch ECU 200, so that the automatic clutch 2 is engaged. Also, the engine 1 is started. As starting operation of the engine 1, cranking of the engine 1 is started through operation of a starter (not shown), and fuel supply from the injectors 15 and ignition of the ignition plugs by the ignitors 16 are started, so that the engine 1 is started. In this case, the target rotational speed of the engine 1 is set according to the operation amount of the accelerator pedal 51 obtained based on the output signal from the accelerator pedal stroke sensor 101. Namely, when the free-running end condition is satisfied in response to depression of the accelerator pedal 51, the target rotational speed is set according to the depression amount. When the free-running end condition is satisfied in response to other operation, or the like, the target rotational speed is set to the idling speed.

Then, the control proceeds to step ST14, in which the free-running execution flag and the recommended gear position display flag are both reset to "0", and then returns.

The operations performed in the above steps ST7, ST9, ST10 are performed by the display controller according to the invention, and correspond to "operation to cause the rotational speed display unit to display rotational speeds of the internal combustion engine corresponding to a plurality of gear positions when the gear positions are established in the gearbox when it is assumed that the clutch device is engaged at the current vehicle speed, during coasting of the vehicle in which the clutch device released, and the plurality of gear positions, such that each of the rotational speeds is associated with a corresponding one of the gear positions". In particular, the operations performed in steps ST9, ST10 correspond to "operation to determine a recommended gear position based on the current vehicle speed, and cause the rotational speed display unit to display the recommended gear position, and the rotational speed of the internal combustion engine when it is assumed that the clutch device is engaged at the current vehicle speed and the recommended gear position is established, such that the recommended gear position is associated with the rotational speed", and "operation to determine a group of recommended gear positions in which the rotational speed of the internal combustion engine is within a predetermined range, based on the current vehicle speed, and cause the rotational speed display unit to display a plurality of gear positions included in the group of the recommended gear positions, and the rotational speeds of the internal combustion engine corresponding to the plurality of gear positions included in the group of recommended gear positions when the gear positions are established when it is assumed that the clutch device is engaged at the current vehicle speed, such that the gear positions are respectively associated with the rotational speeds". These operations are a part of operations performed by the display controller according to the invention.

The operations as described above are repeatedly performed at given time intervals.

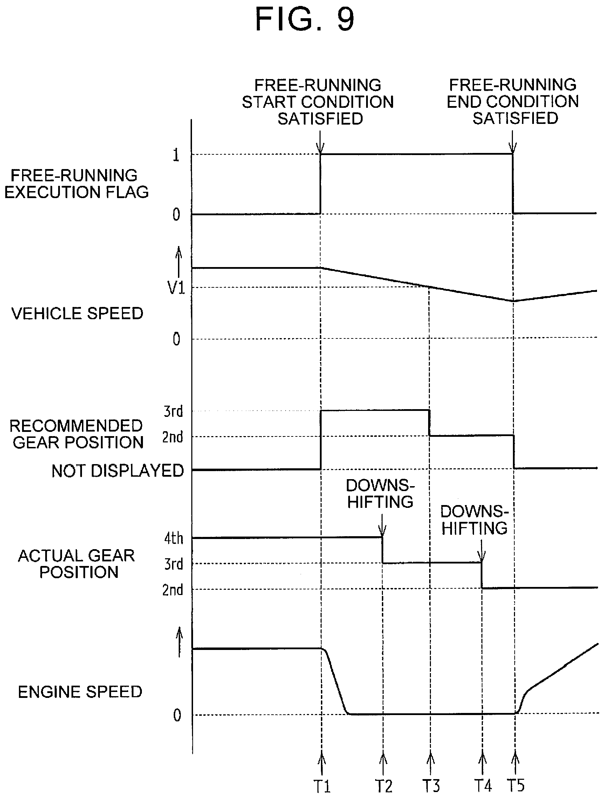

FIG. 9 is a timing chart showing changes in the free-running execution flag, vehicle speed, recommended gear position, actual gear position, and the engine speed, with time, in this embodiment. This timing chart illustrates the case where free-running is started in a condition where the gearbox 3 is in the fourth-speed gear position (4th), and, after the vehicle speed is reduced after the start of free-running, the accelerator pedal 51 is depressed, so that the free-running is finished. Also, the time chart of FIG. 9 shows the case where the driver shifts the gearbox 3 to the recommended gear position, according to the display on the tachometer 7.

Initially, the free-running start condition is satisfied at time T1, so that free-running is started, and the free-running execution flag is set to "1". At the same time, the recommended gear position and the recommended gear position range are displayed on the tachometer 7, and the third-speed gear position (3rd) is set as the recommended gear position. Also, the engine speed becomes equal to 0 as the free-running starts, and the vehicle speed is gradually reduced from the start point of the free-running. The display on the tachometer 7 in this case is in the above-described state shown in FIG. 6, for example.

According to the display of the recommended gear position on the tachometer 7, the driver operates the shift lever 6 (for downshifting) at time T2, so as to change the gear position (actual gear position) of the gearbox 3 to the third-speed gear position (3rd).

Then, when the vehicle speed is reduced down to a predetermined vehicle speed (vehicle speed V1 in FIG. 9) at time T3, the recommended gear position is changed from the third-speed gear position (3rd) to the second-speed gear position (2nd). In this case, the display on the tachometer 7 switches from the above-described state shown in FIG. 6, to the state shown in FIG. 8, for example.

According to the display of the recommended gear position on the tachometer 7, the driver operates the shift lever 6 (for downshifting) at time T4, so as to change the gear position (actual gear position) of the gearbox 3 to the second-speed gear position (2nd).

Then, if the accelerator pedal 51 is depressed, and a (the) free-running end condition is satisfied at time T5, the free-running (mode, operation) is finished, and the free-running execution flag is reset to "0". As a result, (the) display of (each of) the recommended shift position and recommended shift position region (range) is turned off

(switched off).

The automatic clutch 2 is engaged as the free-running (mode, operation) ends, and the operation to start the engine 1 is performed, so that the engine speed increases (starts increasing), and the vehicle speed also increases (start increasing) (accordingly).

As described above, in this embodiment, the engine speeds corresponding to a plurality of gear positions when they are established in the gearbox 3 when it is assumed that the automatic clutch 2 is engaged at the current vehicle speed, during free-running, and the plurality of gear positions, are displayed on the tachometer 7, such that the engine speeds and the gear positions are respectively associated with each other. Therefore, when the driver performs shifting operation during free-running, he/she can grasp, in advance, the relationship between each of the gear positions, and the engine speed when the free-running is finished while the gear position is established. Namely, it is possible to grasp in advance the gear position for obtaining the engine speed suitable for the driver's preference in terms of driving (for example, driving that places a higher value on the fuel consumption rate, or driving that places a higher value on sporty traveling), or the traveling conditions of the vehicle (for example, whether the vehicle is traveling on a flat road or a slope road). As a result, the driver is able to appropriately select the gear position for obtaining the desired traveling state, as the vehicle traveling state at the time when free-running ends, and the driveability can be improved.

In this embodiment, the driver is able to grasp the recommended gear position, by visually checking the display on the tachometer 7. Then, by comparing the respective engine speeds associated with the recommended gear position and the other gear positions displayed, with each other, the driver is able to select one of the gear positions which provides an engine speed suitable for his/her preference in driving or the traveling conditions after the end of free-running.

Further, in this embodiment, the driver selects a gear position out of the group of recommended gear positions displayed on the tachometer 7, and performs gear change, so that the engine speed after the end of free-running falls within the predetermined range in which no over-revolution nor engine stall takes place. Therefore, it is possible to reduce or eliminate a possibility that the engine speed excessively increases after the end of free-running, and the braking force due to engine brake becomes too large, thus causing the driver or passenger to feel strange or uncomfortable. It is also possible to reduce or eliminate a possibility that the gear ratio of the gear position after the end of free-running is too small, thus causing a shortage of the driving force, and sufficient re-acceleration performance cannot be obtained.

Next, a second embodiment of the invention will be described. In this embodiment, a means is provided for comparing the recommended gear position and the actual gear position with each other, and warning the driver when they are different from each other, in addition to the configuration of the first embodiment as described above. The other aspects of the configuration and operation are substantially identical with those of the first embodiment; therefore, the difference from the first embodiment will be mainly described.

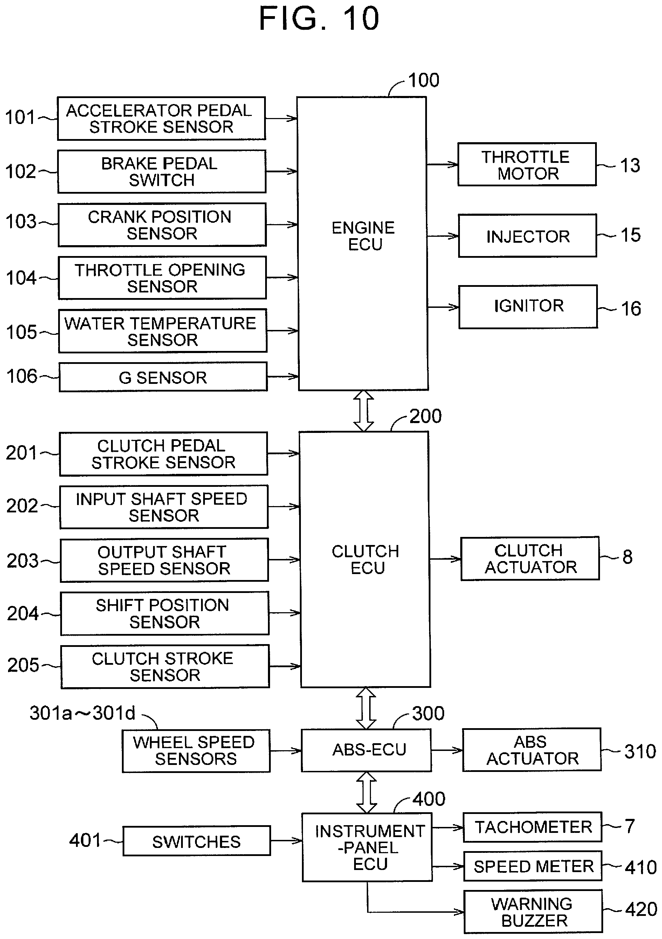

FIG. 10 is a block diagram showing the configuration of a control system involving the ECUs 100 - 400 according to this embodiment. As shown in FIG. 10, a warning buzzer 420 that sounds when the recommended gear position and the actual gear position are different from each other is connected to the output interface of the instrument-panel ECU 400. More specifically, the instrument-panel ECU 400 determines whether the recommended gear position and the actual gear position are different from each other. If these gear positions are different from each other, the instrument-panel ECU 400 outputs a sounding command signal so as to cause the warning buzzer 420 to produce sound. The warning buzzer 420 corresponds to the warning device of the invention (i.e., the warning device that warns the driver, when the actual gear position of the gearbox when the vehicle is coasting is different from the recommended gear position). Also, when the recommended gear position and the actual gear position are different from each other, the instrument-panel ECU 400 outputs a control signal for flashing a display portion of the recommended gear position displayed on the tachometer 7.

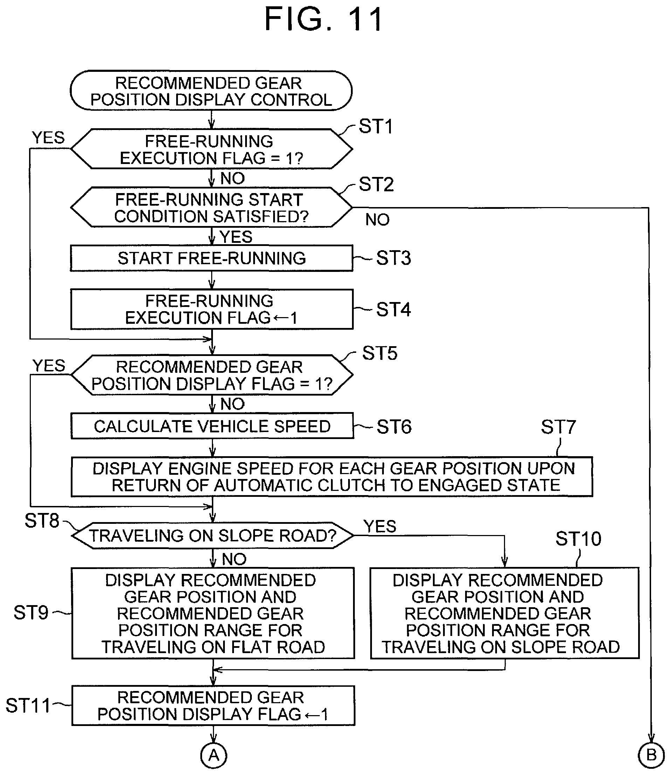

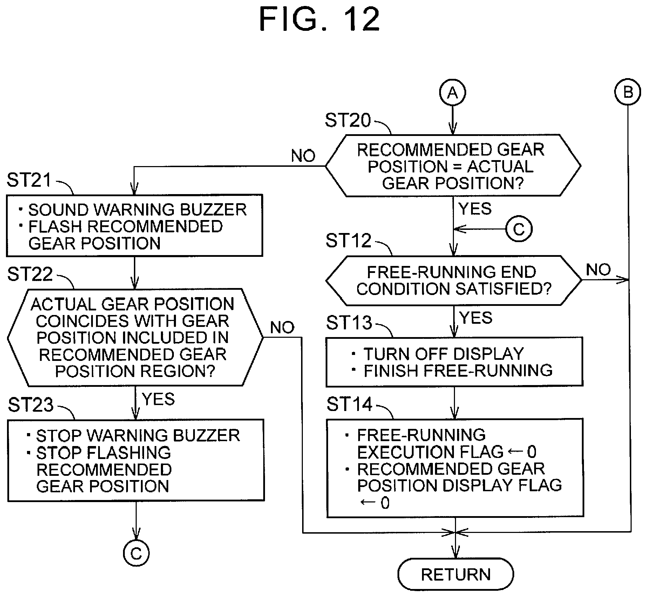

FIG. 11 and FIG. 12 are flowcharts illustrating the procedure of recommended gear position display control according to this embodiment. The operations of steps ST1 - ST14 in this flowchart are similar to the operations of steps ST1 - ST14 of the flowchart shown in FIG. 4 in the first embodiment; therefore, explanation of the operations in these steps will not be provided.

In the flowchart of FIG. 11, the recommended gear position and the recommended gear position range are displayed on the tachometer 7 in step ST9 or step ST10, and, after the recommended gear position display flag is set to "1" in step ST11, the control proceeds to step ST20 (FIG. 12), to determine whether the recommended gear position and the actual gear position coincide with each other. The recommended gear position is determined according to the vehicle speed, as described above. The actual gear position is determined based on an output signal from the shift position sensor 204. In another example, the shift position sensor 204 may not be provided, and the gear ratio (the input shaft rotational speed / the output shaft rotational speed) of the gearbox 3 may be calculated based on output signals from the input shaft speed sensor 202 and the output shaft speed sensor 203, so that the actual gear position is determined based on the calculated gear ratio.

If the recommended gear position and the actual gear position coincide with each other, and an affirmative decision (YES) is obtained in step ST20, the control proceeds to step ST12, to determine whether the free-running end condition is satisfied. The operations following step ST12 are similar to those of the first embodiment.

On the other hand, if the recommended gear position and the actual gear position do not coincide with each other, namely, if the driver has not performed shifting operation according to the display of the recommended gear position, a negative decision (NO) is obtained in step ST20, and the control proceeds to step ST21. In step ST21, a sounding command signal is generated from the instrument-panel ECU 400 to the warning buzzer 420, and the warning buzzer 420 produces sound. Also, a control signal is generated from the instrument-panel ECU 400 to the tachometer 7, so as to flash a display portion of the recommended gear position displayed on the tachometer 7. For example, in the display state shown in FIG. 6, the letters "3rd" flash or blink. Through these operations, the driver is urged to perform shifting operation so that the actual gear position coincides with the recommended gear position. A display portion of the recommended gear position region may be flash or blink in addition to or instead of the recommended gear position.

Then, the control proceeds to step ST22, to determine whether the actual gear position coincides with a gear position included in the recommended gear position region. If the actual gear position have not coincided with the gear position included in the recommended gear position region, and a negative decision (NO) is obtained in step ST22, the control returns.

On the other hand, if the actual gear position coincides with the gear position included in the recommended gear position region, and an affirmative decision (YES) is obtained in step ST22, the control proceeds to step ST23, in which sounding of the warning buzzer 420 is stopped, and flashing of the recommended gear position (and/or the recommended gear position region) is stopped. Then, the control proceeds to step ST12, to determine whether the free-running end condition is satisfied.

The other operations are similar to those of the above embodiment.

In this embodiment, too, the operations of steps ST7, ST9, ST10 as described above correspond to operation performed by the display controller of the invention.

In this embodiment, the following effect will be provided in addition to the effects provided in the first embodiment. In this embodiment, when the recommended gear position and the actual gear position do not coincide with each other, the driver is urged to perform shifting operation, through sounding of the warning buzzer 420 and flashing of the display portion of the recommended gear position. It is thus possible to finish free-running, while placing the gearbox 3 in an appropriate gear position. Consequently, it is possible to reduce or eliminate a possibility of an excessive rise in the engine speed, or a shortage of driving force, after the end of free-running.

Next, a third embodiment of the invention will be described. In the first embodiment as described above, it is determined whether the road on which the vehicle is traveling is a slope road, and the recommended gear position is determined according to the result of the determination. Also, the determination on the slope road is made based on the output signal from the G sensor 106 and the output signals from the wheel speed sensors 301a - 301d. Instead, in this embodiment, the recommended gear position is determined based on information about the road acquired from a navigation system installed on the vehicle. The other aspects of the configuration and operation are substantially identical with those of the first embodiment; therefore, the difference from the first embodiment will be mainly described.

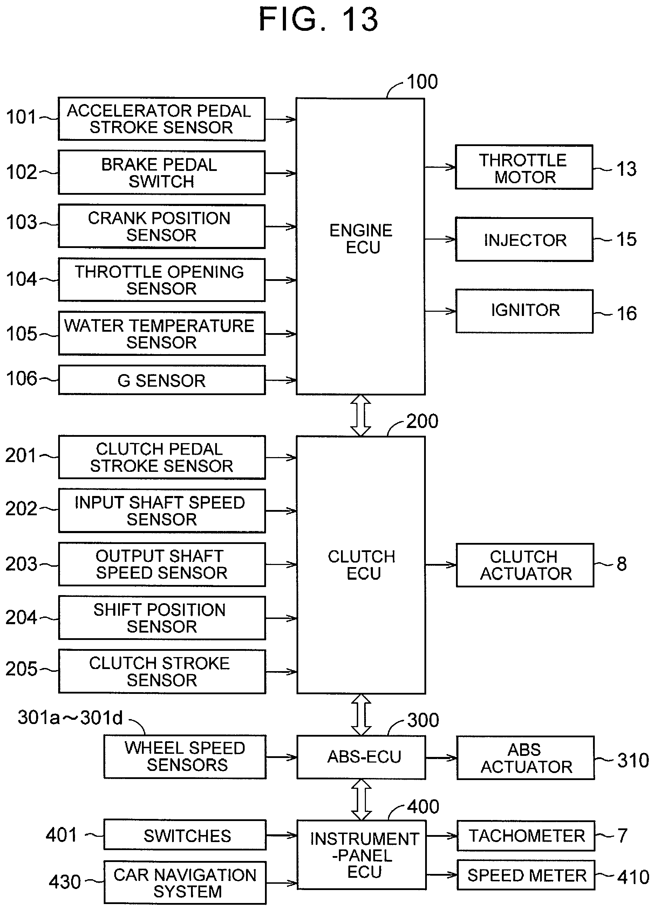

FIG. 13 is a block diagram showing the configuration of a control system involving the ECUs 100 - 400 according to this embodiment. As shown in FIG. 13, a navigation system 430 is connected to the input interface of the instrument-panel ECU 400, and the instrument-panel ECU 400 is configured to receive road information from the navigation system 430. The road information transmitted from the navigation system 430 to the instrument-panel ECU 400 includes, for example, slope information (information as to whether the road is a flat road, an uphill road, or a downhill road), information on the curvature of the road (information as to whether the road is a curve having a predetermined curvature or larger), traffic congestion information, and so forth.

More specifically, the navigation system 430 acquires the current position (latitude and longitude) of the vehicle from a GPS (Global Positioning System). If a destination is set by the driver, the navigation system 430 identifies the destination (latitude and longitude), searches for a traveling route from the current position of the vehicle to the destination, with reference to a map information database, using the Dijkstra's algorithm, for example, and displays the traveling route to the destination, required time, amount of fuel to be consumed, and so forth. To the navigation system 430 is also connected the Vehicle Information and Communication System (VICS, registered trademark) that acquires traffic congestion information, information about accidents, disabled vehicles, and construction works, information about speed limits and lane restriction or closure, and so forth. Then, the navigation system 430 acquires probe traffic information as road traffic information produced using information, such as the actually traveled position and vehicle speed, obtained from data sensors and/or vehicles that share information, and acquires traffic congestion information from one or both of the VICS and a probe information system, so as to grasp a section having traffic congestion, out of a plurality of sections of the traveling route.

The instrument-panel ECU 400 receives the information about the current position of the vehicle, map information, and the traffic congestion information, out of the above items of information, from the navigation system 430, via the input interface. Based on these items of information, the instrument-panel ECU 400 can recognize whether the road on which the vehicle is currently traveling is a slope road having a predetermined gradient or larger, whether the road is a curb having a predetermined curvature or larger, and whether traffic congestion occurs ahead of the vehicle.

When it is determined, based on the road information from the navigation system 430, that the gradient of the road on which the vehicle is traveling is equal to or larger than a predetermined value, the instrument-panel ECU 400 sets the recommended gear position to a gear position that is lower by one speed (having a larger gear ratio) than that when the gradient is smaller than the predetermined value. The recommended gear position is set in this manner, in view of the re-acceleration performance after the end of free-running when the road is an uphill road, and the braking force provided by engine brake at the end of free-running when the road is a downhill road.

When the curvature of the road on which the vehicle is travelling is equal to or larger than the predetermined value (the radius of curvature is equal to or smaller than a predetermined value), the instrument-panel ECU 400 is set the recommended gear position to a gear position that is lower by one speed (having a larger speed (gear) ratio) as compared with the case where the curvature is smaller than the predetermined value. The gear position is set in this manner, so as to enhance the re-accelerating capability (re-acceleration performance) after the vehicle passes the curve.

Further, when the information about occurrence of traffic congestion ahead of the vehicle during free-running is obtained from the navigation system 430, the instrument-panel ECU 400 sets the recommended gear position to a gear position that is lower by one speed (having a larger gear ratio) than that when no traffic congestion occurs. The recommended gear position is set in this manner, so as to provide large braking force produced by engine brake after the end of free-running, when the free-running end condition is satisfied in response to operation of the brake pedal 53, for example.

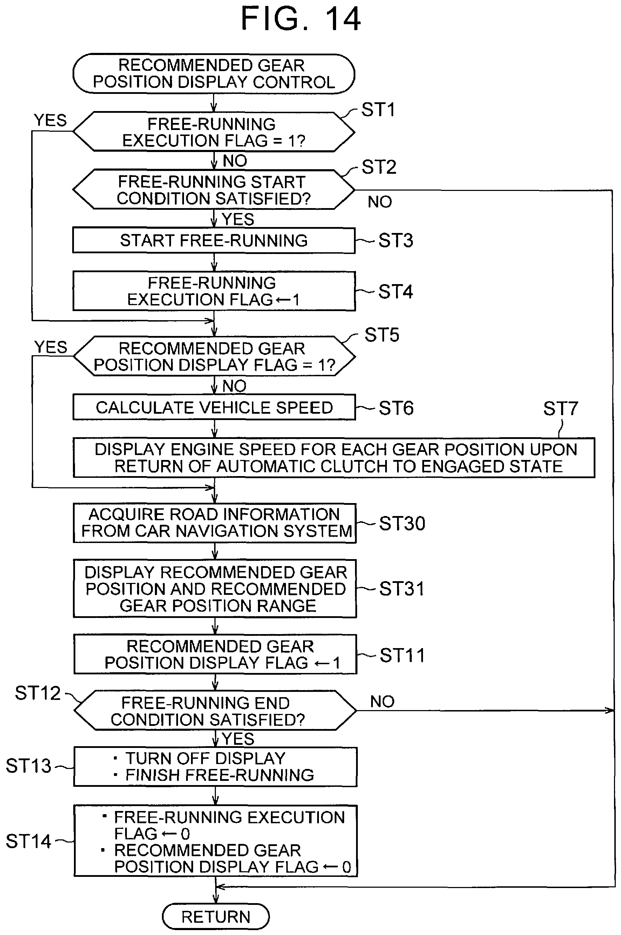

FIG. 14 is a flowchart illustrating the procedure of recommended gear position display control according to this embodiment. In this flowchart, the operations of steps ST1 - ST7 and ST11 - ST14 are similar to those of steps ST1 - ST7 and ST11 - ST14 of the flowchart shown in FIG. 4 in the first embodiment. Therefore, the operations in these steps will not be described.

In the flowchart of FIG. 14, after the engine speed for each gear position where it is assumed that the automatic clutch 2 returns to the engaged state is displayed on the tachometer 7 in step ST7, the control proceeds to step ST30, to acquire road information from the navigation system 430. Namely, the slope information of the road, curvature information of the road, and traffic congestion information are acquired from the navigation system 430.

Then, in step ST31, the recommended gear position is determined based on the road information acquired from the navigation system 430, and the recommended gear position and the recommended gear position range are displayed on the tachometer 7.

More specifically, when the gradient of the road on which the vehicle is traveling is equal to or larger than the predetermined value, the recommended gear position is set to the gear position that is lower by one speed than that when the gradient is smaller than the predetermined value. Namely, even if the vehicle is traveling at the same vehicle speed, the display on the tachometer 7 will be the one shown in FIG. 6, for example, when the gradient of the road is smaller than the predetermined value, whereas the display on the tachometer 7 will be the one shown in FIG. 7, for example, when the gradient of the road is equal to or larger than the predetermined value.

When the curvature of the road on which the vehicle is traveling is equal to or larger than the predetermined value, the recommended gear position is set to the gear position that is lower by one speed than that when the curvature is smaller than the predetermined value. Namely, even if the vehicle is traveling at the same vehicle speed, the display on the tachometer 7 will be the one shown in FIG. 6, for example, when the curvature of the road is smaller than the predetermined value, whereas the display on the tachometer 7 will be the one shown in FIG. 7, for example, when the curvature of the road is equal to or larger than the predetermined value.

Further, when the information to the effect that traffic congestion occurs ahead of the vehicle during free-running is obtained from the navigation system 430, the recommended gear position is set to the gear position that is lower by one speed than that when no traffic congestion occurs. Namely, even if the vehicle is traveling at the same vehicle speed, the display on the tachometer 7 will be the one shown in FIG. 6, for example, when no traffic congestion occurs, whereas the display on the tachometer 7 will be the one shown in FIG. 7, for example, when traffic congestion occurs.

After the recommended gear position and the recommended gear position range are displayed on the tachometer 7 in the above manner, the control proceeds to step ST11, in which the recommended gear position display flag is set to "1".

The other operations are similar to those in the case of the first embodiment.

In this embodiment, the operations of the above steps ST7, ST31 correspond to operation performed by the display controller according to the invention.

Also, in this embodiment, the recommended gear position is determined, based on not only the information as to whether the road on which the vehicle is currently traveling is a slope road having a predetermined gradient or larger, but also the information as to whether the road is a curve having a predetermined curvature or larger, and the information as to whether traffic congestion occurs ahead of the vehicle, and the recommended gear position thus determined and the recommended gear position range are displayed on the tachometer 7. Therefore, appropriate display can be provided according to traveling conditions of the vehicle.

Next, a fourth embodiment of the invention will be described. In the first embodiment as described above, the information (information about the relationship between the gear position and the engine speed) displayed to the driver during free-running is displayed only on the tachometer 7. In this embodiment, an engine torque map is displayed on the instrument panel, in addition to the above information, and the relationship among the engine speed, gear position, and engine torque is displayed to the driver. The other aspects of the construction and operation are similar to those of the first embodiment; therefore, the difference from the first embodiment will be mainly described.

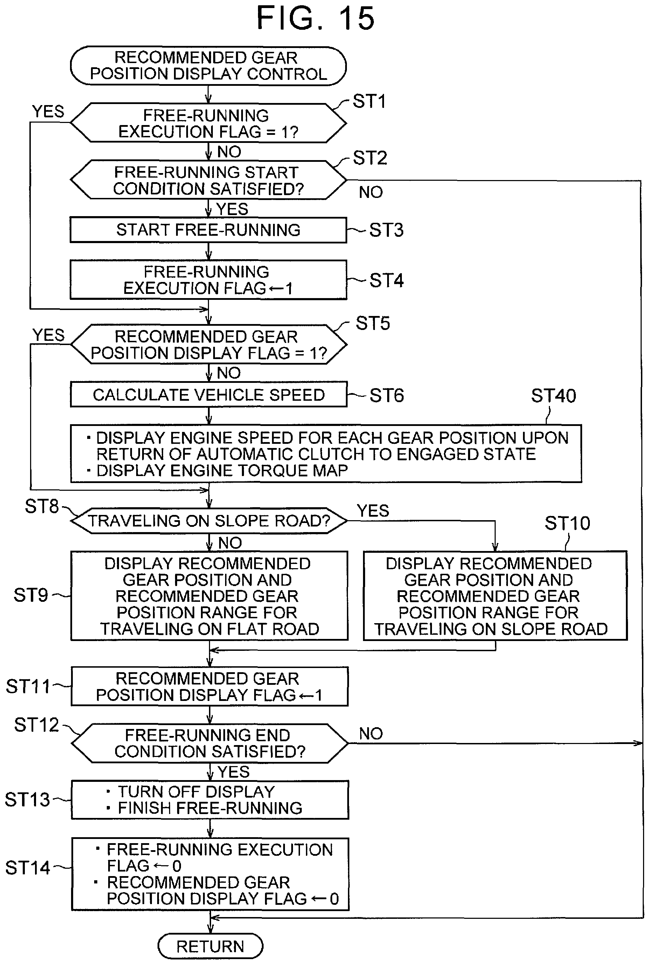

FIG. 15 is a flowchart illustrating the procedure of recommended gear position display control according to this embodiment. The operations of steps ST1 - ST6 and ST8 - ST14 in this flowchart are similar to those of steps ST1 - ST6 and ST8 - ST14 of the flowchart shown in FIG. 4 in the first embodiment; therefore, explanation of the operations in these steps will not be provided.

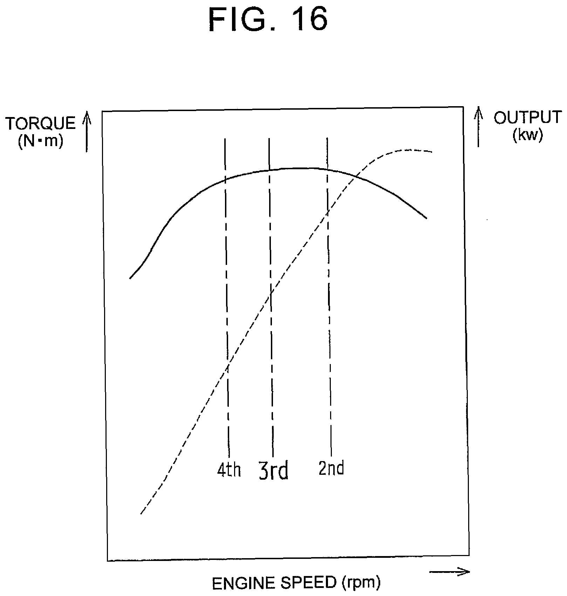

In the flowchart of FIG. 15, after the current vehicle speed is calculated in step ST6, the control proceeds to step ST40, in which the engine speed for each gear position where it is assumed that the automatic clutch 2 returns to the engaged state at this point in time is calculated, and the result of the calculation is displayed on the tachometer 7, as in the case of step ST7 in the first embodiment. At the same time, in step ST40, an engine torque map shown in FIG. 16 is displayed on the instrument panel. In the engine torque map, the horizontal axis indicates the engine speed, and the vertical axes indicate the output and torque of the engine. The engine torque map also indicates the relationship between each gear position, and the engine speed corresponding to the gear position, when it is assumed that the automatic clutch 2 is engaged at the current vehicle speed. Although not specifically indicated in FIG. 16, the engine speed, engine output, and engine torque are displayed in the form of specific numerical values, in the engine torque map.

During free-running, the driver is able to grasp, in advance, the relationship among the engine speed, engine output, engine torque, and each gear position, by visually checking the engine torque map, and is thus able to more appropriately select a gear position for obtaining the engine speed, engine output, and engine torque suitable for the driver's preference in terms of driving or traveling conditions of the vehicle. In the engine torque map, the letters (the letters "3rd" in the example of FIG. 16) representing the recommended gear position are displayed in larger size than those representing the other gear positions.

After the engine speed for each gear position is displayed on the tachometer 7, and the engine torque map is displayed on the instrument panel, the control proceeds to step ST8 and subsequent steps.

The other operations are similar to those in the case of the above embodiments.

In this embodiment, the operations of the above steps ST40, ST9, ST10 correspond to operation performed by the display controller according to the invention.

The present invention is not limited to each of the illustrated embodiments, but may be embodied with all modifications and applications encompassed by the appended claims and equivalents thereof.

While the invention is applied to the FF-type vehicle in the illustrated embodiments, the invention may also be applied to a FR (front-engine, rear-drive) type vehicle, 4WD (four-wheel drive) vehicle, or a mid-engined vehicle, for example. While the gearbox 3 having forward six-speed positions is used in the illustrated embodiments, the invention is not limited to the use of this type of gearbox, but the number of the gear positions may be set as desired.

While the internal combustion engine is a gasoline engine in the illustrated embodiments, the invention is not limitedly applied to this type of engine, but the internal combustion engine may be a diesel engine, or other types of internal combustion engines.

While the automatic clutch 2 is actuated by the CSC 22 in the illustrated embodiments, the invention is not limited to the use of this type of clutch device, but may be applied to a vehicle having a clutch device of a known release fork type, in which a release bearing is moved by a release fork.

While the engine 1 is stopped during free-running in the illustrated embodiments, the invention is not limited to this mode of operation, but the engine 1 may be driven (at about an idling speed) during free-running.

In the illustrated embodiments, control performed when free-starting is automatically started when the free-running start condition is satisfied has been described. However, this invention is not limited to the control, but may be applied to the case where free-running is performed when the clutch pedal 91 is continuously depressed by the driver.

The invention can be applied to display on a tachometer during free-running, with respect to a vehicle capable of traveling in a free-running mode.

## Claims

1. A display system for a vehicle that includes an internal combustion engine (1), a gearbox (3) configured to change gear positions according to shifting operation of a driver, and a clutch device (2) that is disposed in a power transmission pathway between the internal combustion engine (1) and the gearbox (3), and can be released and engaged, the display system comprising:
a rotational speed display unit (7) that displays a rotational speed of the internal combustion engine (1) to the driver; and
a display controller (400) that causes the rotational speed display unit (7) to display rotational speeds of the internal combustion engine (1) corresponding to a plurality of gear positions when the gear positions are established in the gearbox (3) when it is assumed that the clutch device is engaged at a current vehicle speed, during coasting of the vehicle in which the clutch device is released, and the plurality of gear positions, such that each of the rotational speeds is associated with a corresponding one of the plurality of gear positions.

2. The display system according to claim 1, wherein the display controller (400) is configured to determine a recommended gear position based on the current vehicle speed, and cause the rotational speed display unit (7) to display the recommended gear position, and the rotational speed of the internal combustion engine (1) when it is assumed that the clutch device is engaged at the current vehicle speed and the recommended gear position is established, such that the recommended gear position is associated with the rotational speed.

3. The display system according to claim 1 or 2, wherein the display controller (400) is configured to determine a group of recommended gear positions in which the rotational speed of the internal combustion engine (1) is within a predetermined range, based on the current vehicle speed, and cause the rotational speed display unit (7) to display a plurality of gear positions included in the group of recommended gear positions, and the rotational speeds of the internal combustion engine (1) corresponding to the plurality of gear positions included in the group of recommended gear positions when the gear positions are established when it is assumed that the clutch device is engaged at the current vehicle speed, such that the plurality of gear positions are respectively associated with the rotational speeds.

4. The display system according to claim 2, wherein:
the display controller (400) comprises a slope determining unit (ST8) that determines whether a road on which the vehicle is traveling is a slope road having a predetermined gradient or larger; and
when the slope determining unit (ST8) determines that the road is the slope road having the predetermined gradient or larger, the display controller (400) is configured to cause the rotational speed display unit (7) to display a gear position having a larger gear ratio than that when the road is the slope road having a smaller gradient than the predetermined gradient, as the recommended gear position.

5. The display system according to claim 2 or 4, further comprising a warning device (420) that warns the driver when an actual gear position of the gearbox (3) when the vehicle is coasting is different from the recommended gear position.

6. The display system according to any one of claims 2, 4 and 5, wherein the display controller (400) is configured to acquire information about a road on which the vehicle is traveling, from a navigation system (430), and cause the rotational speed display unit (7) to display the recommended gear position determined according to the information acquired from the navigation system (430).

7. The display system according to any one of claims 1 to 6, wherein the display controller (400) is configured to cause a display panel provided in a vehicle interior to display relationships among the rotational speed of the internal combustion engine (1), output of the internal combustion engine (1), torque of the internal combustion engine (1), and each of the gear positions of the gearbox (3), along with display of the rotational speed display unit (7).
